(19) Europäisches Patentamt
European Patent Office
Office européen des brevets

(11) **EP 3 480 259 B1**

(12) **EUROPEAN PATENT SPECIFICATION**

(45) Date of publication and mention
of the grant of the patent:
**27.12.2023 Bulletin 2023/52**

(21) Application number: **17855210.5**

(22) Date of filing: **16.03.2017**

(51) International Patent Classification (IPC):
*C08L 101/00* (2006.01)    *C08J 5/04* (2006.01)
*C08K 7/06* (2006.01)    *C08K 7/14* (2006.01)
*C08L 23/00* (2006.01)    *C08L 77/00* (2006.01)
*C08L 23/06* (2006.01)    *C08L 23/12* (2006.01)
*B29C 45/00* (2006.01)

(52) Cooperative Patent Classification (CPC):
(C-Sets available)
**C08L 23/26; C08J 5/04; C08K 7/06; C08L 23/0815;
C08L 23/12; C08L 77/00; C08L 101/00**    (Cont.)

(86) International application number:
**PCT/JP2017/010761**

(87) International publication number:
**WO 2018/061251 (05.04.2018 Gazette 2018/14)**

(54) **RESIN COMPOSITION AND RESIN MOLDED BODY**

HARZZUSAMMENSETZUNG UND HARZFORMKÖRPER

COMPOSITION DE RÉSINE ET CORPS MOULÉ EN RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2016 JP 2016190266**

(43) Date of publication of application:
**08.05.2019 Bulletin 2019/19**

(73) Proprietor: **FUJIFILM Business Innovation Corp.
Minato-ku
Tokyo (JP)**

(72) Inventors:
• **MIYAMOTO Tsuyoshi
Minamiashigara-shi
Kanagawa 250-0111 (JP)**
• **OKOSHI Masayuki
Minamiashigara-shi
Kanagawa 250-0111 (JP)**

• **MORIYA Hiroyuki
Minamiashigara-shi
Kanagawa 250-0111 (JP)**

(74) Representative: **Haseltine Lake Kempner LLP
Bürkleinstrasse 10
80538 München (DE)**

(56) References cited:
**JP-A- H0 258 552    JP-A- H06 100 775
JP-A- 2001 503 799    JP-A- 2005 162 775
JP-A- 2010 168 526    JP-A- 2010 168 559**

**(Cont. next page)**

(52) Cooperative Patent Classification (CPC): (Cont.)

C-Sets
**C08L 23/0815, C08K 7/06, C08L 23/26,
C08L 77/00, C08L 77/00;
C08L 23/12, C08K 7/06, C08L 23/26, C08L 77/00,
C08L 77/00**

**Description**

Technical Field

The present invention relates to a resin composition and a resin molded body.

Background Art

Conventionally, resin compositions have been provided and used for various purposes.

Particularly, resin compositions containing thermoplastic resins are used for components such as household electric appliances, various components of automobiles, casings, or casings of office equipment and electronic/electric appliances or the like.

For example, Patent Literature 1 discloses "a long fiber reinforced polyolefin structure having a length of 3 mm or more, containing: (a) 0.1 wt% to 90 wt% of at least one type of polyolefin; (b) 0.1 wt% to 50 wt% of at least one type of polyamide; (c) 0.1 wt% to 15 wt% of at least one type of modified polyolefin; (d) 5.0 wt% to 75 wt% of at least one type of reinforcing fiber; and (e) 0.1 wt% to 10 wt% of at least one type of sulfur-containing additive".

In addition, Patent Literature 2 discloses "a modifier for a polyolefin resin, containing a polymer (X), the polymer (X) containing an acid-modified polyolefin (A) block and a polyamide (B) block, and a ratio ($\alpha$), measured by $^{13}$C-NMR, of carbon derived from an amide group to carbon derived from a methyl group, a methylene group and a methine group is 0.5/99.5 to 12/88". Further, Patent Literature 2 discloses "an inorganic fiber-containing polyolefin resin composition containing the polyolefin resin modifier (K), the polyolefin resin (D) and the inorganic fiber (E)."

Patent Literature 3 discloses a molded article made of a polyamide resin obtained from the copolymerisation of a semi-aromatic polyamide with an aliphatic polyamide, brominated polystyrene resin, an acid-modified polyolefin resin and carbon fiber as inorganic filler.

Patent Literature 4 discloses a composition comprising a semi-aromatic polyamide, an organic filler, which can be a carbon fiber and a polypropylene resin, wherein the polypropylene resin consists of 10 to 100 wt.% polypropylene grafted with an $\alpha,\beta$ unsaturated carboxylic acid and 0 to 90 wt.% of an unmodified polypropylene thermoplastic resin.

Patent Literature 5 discloses a composition containing polyamide-type resins, polypropylene resin and/or a modified-polypropylene resin, and an inorganic reinforcement, which can be a carbon fiber. The polyamide-type resins are based on a crystalline polyamide resin, which contains a ring-opened lactam, such as caprolactam (Nylon 6) or hexamethylenediamine and adipic acid (Nylon 66) and a semi-aromatic polyamide which has any of the diamine or carboxylic units that can be aromatic.

Citation List

Patent Literature

Patent Literature 1: JP-T-2003-528956
Patent Literature 2: JP-A-2014-181307
Patent Literature 3 : JP 2010 168559 A
Patent Literature 4 : JP H06 100775 A
Patent Literature 5 : JP 2005 162775 A

Summary of Invention

Technical Problem

A problem of the present invention is to provide a resin composition capable of obtaining a resin molded body excellent in flexural modulus, compared with a case where in a resin composition containing a thermoplastic resin, a carbon fiber, a polyamide and a compatibilizer, only a polyamide not containing an aromatic rings is contained as the polyamide.

Solution to Problem

The above problem is achieved by the following aspects of the present invention.
[1] In a first aspect the present inventive relates to a resin composition, containing:

a thermoplastic resin;
a carbon fiber;
polyamides having:

a structural unit containing an aromatic ring, other than an aramid structure, the structural unit containing an aromatic ring being a structural unit in which a dicarboxylic acid and a diamine are condensation-polymerized, and
a structural unit not containing an aromatic ring, the structural unit not containing an aromatic ring being a structural unit in which a dicarboxylic acid and a diamine are condensation-polymerized, or the structural unit being a ring-opened lactam; and

a compatibilizer, wherein the compatibilizer is a modified polyolefin and includes a site having an affinity with the polyamide and the site having an affinity with the polyamide is a modification site containing a carboxy group, a carboxylic acid anhydride residue, a carboxylic acid ester residue, an imino group, an amino group, or an epoxy group;

wherein the thermoplastic resin is a polyolefin;
and wherein the content of the polyamides is 0.1 part by mass to 100 parts by mass with respect to 100 parts by mass of the thermoplastic resin.

[2] The resin composition according to [1], wherein the modification site contains a carboxylic acid anhydride residue.
[3] The resin composition according to [1], wherein the modification site includes maleic anhydride, fumaric anhydride, citric anhydride, N-phenyl maleimide. N-cyclohexylmaleimide, glycidyl (meth)acrylate, glycidyl vinyl benzoate, N-[4-(2.3-epoxypropoxy)-3,5 dimethylbenzyl] acrylamide, an alkyl (meth)acrylate, and derivatives thereof.
[4] The resin composition according to [1], wherein the modification site contains a maleic anhydride residue.
[5] The composition according to [1], the structural unit containing an aromatic ring may be at least one of the following structural units (1) and (2), and
the structural unit not containing an aromatic ring may be at least one of the following structural units (3) and (4):

.

Structural unit (1): $-(-NH-Ar^1-NH-CO-R^1-CO-)-$

-(In the structural unit (1), $Ar^1$ represents a divalent organic group containing an aromatic ring. $R^1$ represents a divalent organic group not containing an aromatic ring.)
.

Structural unit (2): $-(-NH-R^2-NH-CO-Ar^2-CO-)-$

-(In the structural unit (2), $Ar^2$ represents a divalent organic group containing an aromatic ring. $R^2$ represents a divalent organic group not containing an aromatic ring.)
.

Structural unit (3): $-(-NH-R^{31}-NH-CO-R^{32}-CO-)-$

-(In the structural unit (3), $R^{31}$ represents a divalent organic group not containing an aromatic ring. $R^{32}$ represents a divalent organic group not containing an aromatic ring.)
.

Structural unit (4): $-(-NH-R^4-CO-)-$

-(In the structural unit (4), $R^4$ represents a divalent organic group not containing an aromatic ring.)

[6] The composition according to [1],
the polyamides may be copolymerized polyamides obtained by copolymerizing a first polyamide having the structural unit containing an aromatic ring and a second polyamide having the structural unit not containing an aromatic ring.

[7] The composition according to [1],
the polyamides may be a mixture of polyamides, the mixture containing a first polyamide having the structural unit containing an aromatic ring and a second polyamide having the structural unit not containing an aromatic ring.
[8] The composition according to [1],
wherein a proportion of the aromatic ring in the polyamides may be 10 mass% to 40 mass%.
[9] The composition according to [1],
wherein an average fiber length of the carbon fibers may be 0.1 mm to 5.0 mm, as measured according to the method disclosed further below.
[10] The composition according to [1], wherein the average fiber length of the carbon fibers may be 0.2 mm to 2.0 mm, as measured according to the method disclosed further below.
[11] The composition according to [1],
wherein a content of the carbon fiber may be 0.1 part by mass to 200 parts by mass with respect to 100 parts by mass of the thermoplastic resin.
[12] The composition according to [1],
wherein a content of the compatibilizer may be 1 part by mass to 50 parts by mass with respect to 100 parts by mass of the thermoplastic resin.
[13] The composition according to [1],
the content of the polyamide may be 1 mass% to 200 mass% with respect to the mass of the carbon fiber.
[14] The composition according to [1],
the content of the compatibilizer may be 1 mass% to 100 mass% with respect to the mass of the carbon fiber.
[15] The composition according to [1],
the resin composition may be a non-crosslinked resin composition.
[16] Another aspect of the present invention relates to a resin molded body, comprising the resin composition according to any one of [1] to [15].

Advantageous Effects of Invention

According to the viewpoints of [1], [5], [6] or [7], a resin composition capable of obtaining a resin molded body excellent in flexural modulus can be provided, compared with a case where in a resin composition containing a thermoplastic resin, a carbon fiber, a polyamide and a compatibilizer, only a polyamide not containing an aromatic rings is contained as the polyamide.

According to the viewpoint of [8], a resin composition capable of obtaining a resin molded body excellent in flexural modulus can be provided, compared with a case where the proportion of the aromatic ring of the polyamide is less than 10 mass% or more than 40 mass%.

According to the viewpoint of [1], a resin composition capable of obtaining an inexpensive resin molded body can be provided, compared with a case where an acrylonitrile butadiene styrene copolymer or a general resin of a styrene polymer is used as the thermoplastic resin.

According to the viewpoint of [1], a resin composition capable of obtaining a resin molded body excellent in flexural modulus can be provided, compared with a case where an epoxy copolymer is used as the compatibilizer.

According to the viewpoint of [9], a resin composition containing carbon fibers having an average fiber length of 0.1 mm to 5.0 mm and capable of obtaining a resin molded body excellent in flexural modulus can be provided, compared with a case where in a resin composition containing a thermoplastic resin, a carbon fiber, a polyamide and a compatibilizer, only a polyamide not containing an aromatic rings is contained as the polyamide.

According to the viewpoint of [10], a resin composition capable of obtaining a resin molded body containing carbon fibers having an average fiber length of 0.2 mm to 2.0 mm and excellent in flexural modulus can be provided, compared with a case where in a resin composition containing a thermoplastic resin, a carbon fiber, a polyamide and a compatibilizer, only a polyamide not containing an aromatic rings is contained as the polyamide.

According to the viewpoint of [11], a resin composition capable of obtaining a resin molded body excellent in flexural modulus can be provided, compared with a case where the content of the carbon fiber is less than 0.1 part by mass or more than 200 parts by mass with respect to 100 parts by mass of the thermoplastic resin.

According to the viewpoint of [1], a resin composition capable of obtaining a resin molded body excellent in flexural modulus can be provided, compared with a case where the content of the polyamide is less than 0.1 part by mass or more than 100 parts by mass with respect to 100 parts by mass of the thermoplastic resin.

According to the viewpoint of [12], a resin composition capable of obtaining a resin molded body excellent in flexural modulus can be provided, compared with a case where the content of the compatibilizer is less than 1 part by mass or more than 50 parts by mass with respect to 100 parts by mass of the thermoplastic resin.

According to the viewpoint of [13], a resin composition capable of obtaining a resin molded body excellent in flexural modulus can be provided, compared with a case where the content of the polyamide is less than 1 mass% or more than 200 mass% with respect to the mass of the carbon fiber.

According to the viewpoint of [14], a resin composition capable of obtaining a resin molded body excellent in flexural modulus can be provided, compared with a case where the content of the compatibilizer is less than 1 mass% or more than 100 mass% with respect to the mass of the carbon fiber.

According to the viewpoints of [15], a resin composition capable of obtaining a resin molded body excellent in flexural modulus can be provided, compared with a case where in a non-crosslinked resin composition containing a thermoplastic resin, a carbon fiber, a polyamide and a compatibilizer, only a polyamide not containing an aromatic rings is contained as the polyamide.

According to the viewpoints of [16] a resin molded body excellent in flexural modulus can be provided, compared with a case where in a resin molded body containing a thermoplastic resin, a carbon fiber, a polyamide and a compatibilizer, only a polyamide not containing an aromatic rings is contained as the polyamide.

Brief Description of Drawings

Fig. 1 is a model diagram showing a main part of a resin molded body according to the present embodiment.
Fig. 2 is a pattern diagram for describing an example of the main part of the resin molded body according to the present embodiment.
Fig. 3 is a pattern diagram of a test using a micro-droplet method.

Description of Embodiments

Hereinafter, embodiments which are examples of a resin composition and a resin molded body of the present invention are described.

[Resin Composition]

The resin composition according to the present invention contains a thermoplastic resin, a carbon fiber, polyamides, and a compatibilizer. The polyamides contain a structural unit containing an aromatic ring other than an aramid structure, the structural unit containing an aromatic ring being a structural unit in which a dicarboxylic acid and a diamine are condensation-polymerized, and a structural unit not containing an aromatic ring, the structural unit not containing an aromatic ring being a structural unit in which a dicarboxylic acid and a diamine are condensation-polymerized, or the structural unit being a ring-opened lactam.

In recent years, in order to obtain a resin molded body excellent in mechanical strength, a resin composition containing a thermoplastic resin as a base material (matrix) and a reinforcing fiber is used.

In such a resin composition, when the affinity between the reinforcing fiber and the thermoplastic resin is low, a space is formed at the interface therebetween, and the adhesion at this interface sometimes decreases.

Particularly in a case where a carbon fiber is used as the reinforcing fiber in the resin composition, higher mechanical strength is required as compared with a glass fiber or the like, but polar groups contributing to adhesion to the thermoplastic resin, such as hydroxyl group and carboxyl group, on the surface of the carbon fiber are fewer than those on the glass fiber, so that the adhesion at the interface between the carbon fiber and the thermoplastic resin decreases. As a result, the mechanical strength, particularly the flexural modulus, is difficult to increase for the high blending ratio of the carbon fiber. Particularly in a case where repeated bending load is applied, peeling at the interface between the carbon fiber and the thermoplastic resin is likely to proceed, so that the decrease in the flexural modulus from the initial stage tends to increase.

Therefore, the resin composition according to the present invention contains four components, a thermoplastic resin, a carbon fiber, polyamides, and a compatibilizer. In addition, the polyamides have a structural unit containing an aromatic ring other than an aramid structure, the structural unit containing an aromatic ring being a structural unit in which a dicarboxylic acid and a diamine are condensation-polymerized, and a structural unit not containing an aromatic ring, the structural unit not containing an aromatic ring being a structural unit in which a dicarboxylic acid and a diamine are condensation-polymerized, or the structural unit being a ring-opened lactam;

the compatibilizer is a modified polyolefin and includes a site having an affinity with the polyamide and the site having an affinity with the polyamide is a modification site containing a carboxy group, a carboxylic acid anhydride residue, a carboxylic acid ester residue, an imino group, an amino group, or an epoxy group;
the thermoplastic resin is a polyolefin;
and the content of the polyamides is 0.1 part by mass to 100 parts by mass with respect to 100 parts by mass of the thermoplastic resin.

Due to this configuration, a resin molded body excellent in flexural modulus can be obtained. Although the effect of obtaining such an effect is unclear, it is presumed as follows.

In obtaining a resin molded body from the resin composition according to the present embodiment, when the resin composition is heat-molten and mixed, the thermoplastic resin as the base material and the compatibilizer are melted, a part of a molecule of the compatibilizer and an amide bond contained in the molecule of the polyamide are compatible with each other and the polyamide is dispersed in the resin composition.

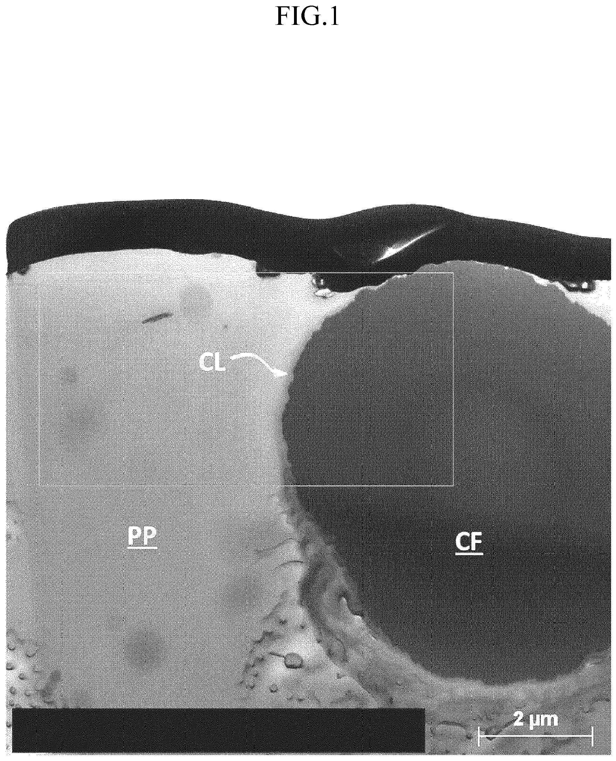

In this state, when the polyamide is in contact with the carbon fiber, amide bonds contained in a large number along the molecular chain of the polyamide and polar groups slightly present on the surface of the carbon fiber physically adhere at a plurality of sites with an affinity (attraction force and hydrogen bonds). In addition, since the thermoplastic resin and the polyamide are generally less compatible, the frequency of contact between the polyamide and the carbon fiber increases by the repulsive force between the thermoplastic resin and the polyamide, and as a result, the adhesion amount and adhesion area of the polyamide to the carbon fiber increase. Accordingly, a coating layer of the polyamide is formed around the carbon fiber (see Fig. 1). In Fig. 1, PP denotes a thermoplastic resin, CF denotes a carbon fiber, and CL denotes a coating layer.

Further, the polyamide forming the coating layer is also compatible with a part of reactive groups in the molecule of the compatibilizer due to a chemical reaction and electrostatic interaction between polar groups, so that the compatibilizer is also compatible with the thermoplastic resin, thereby the attractive force and the repulsive force are in equilibrium state, and the coating layer formed by the polyamide is formed in a thin and nearly uniform state. Particularly, since the affinity between the carboxy group present on the surface of the carbon fiber and the amide bond contained in the molecule of the polyamide is high, the coating layer of the polyamide is easily to be formed around the carbon fiber, and the coating layer is considered to be a thin film having excellent uniformity.

On the other hand, when a polyamide having a structural unit containing an aromatic ring other than an aramid structural unit and a structural unit not containing an aromatic ring is applied as the polyamide having such an action, the carbon fiber and the thermoplastic resin have a good affinity with each other. Here, a polyamide only having a structural unit containing an aromatic ring tends to have a higher affinity for the carbon fiber and a lower affinity for the thermoplastic resin, compared with a polyamide only having a structural unit not containing an aromatic ring. The polyamide only having a structural unit not containing an aromatic ring tends to have a lower affinity for the carbon fiber and a higher affinity for the thermoplastic resin, compared with a polyamide only having a structural unit containing an aromatic ring. Therefore, by applying the polyamide having both structural units, the affinity between the carbon fiber and the thermoplastic resin is improved, and the adhesion of the interface between the carbon fiber and the thermoplastic resin is further enhanced by the coating layer of the polyamide.

Although it is preferable that the entire circumference of the carbon fiber is coated by the coating layer, there may be a portion which is not partially coated.

It is presumed from the above that the resin composition according to the present embodiment has enhanced adhesion at the interface between the carbon fiber and the thermoplastic resin, and that a resin molded body excellent in mechanical strength, particularly the flexural modulus can be obtained therefrom.

In the resin composition according to the present embodiment, when the polyamide having a structural unit containing an aromatic ring other than an aramid structural unit and a structural unit not containing an aromatic ring is applied as the polyamide, the melt viscosity is lowered, and the moldability (for example, injection moldability) is also improved. Therefore, a resin molded body having high appearance quality can be easily obtained.

When a polyamide only having an aramid structural unit is applied as the polyamide, thermal degradation of the thermoplastic resin is caused at a high temperature at which the polyamide melts. In addition, at a temperature at which the thermal degradation of the thermoplastic resin is caused, the polyamide cannot sufficiently melt, the moldability (for example, injection moldability) is deteriorated, and the appearance quality and the mechanical performance of the obtained resin molded body are lowered.

Here, in the resin composition according to the present embodiment and the resin molded body obtained therefrom, it is preferable that a coating layer of the polyamide is formed around the carbon fiber by heat-melt-kneading and injection molding in production of the resin composition (for example, pellets), and the coating layer has a thickness of 5 nm to 700 nm.

In the resin composition according to the present embodiment, the thickness of the coating layer of the polyamide is 5 nm to 700 nm, and is preferably 10 nm to 650 nm from the viewpoint of further improvement of the flexural modulus. When the thickness of the coating layer is 10 nm or more, the flexural modulus is improved; when the thickness of the coating layer is 700 nm or less, the interface between the carbon fiber and the thermoplastic resin can be prevented from becoming brittle via the coating layer and the reduction in flexural modulus can be suppressed.

The thickness of the coating layer is a value measured by the following method. An object to be measured is broken in liquid nitrogen, and the cross section thereof is observed using an electron microscope (VE-9800 manufactured by Keyence Corporation). On the cross section, the thickness of the coating layer to be coated around the carbon fiber is measured at 100 points, and an average value is calculated.

The coating layer is confirmed by observing the above cross section.

In the resin composition (and the resin molded body thereof) according to the present embodiment, for example, a configuration is adopted in which the compatibilizer is partially dissolved between the coating layer and the thermoplastic resin.

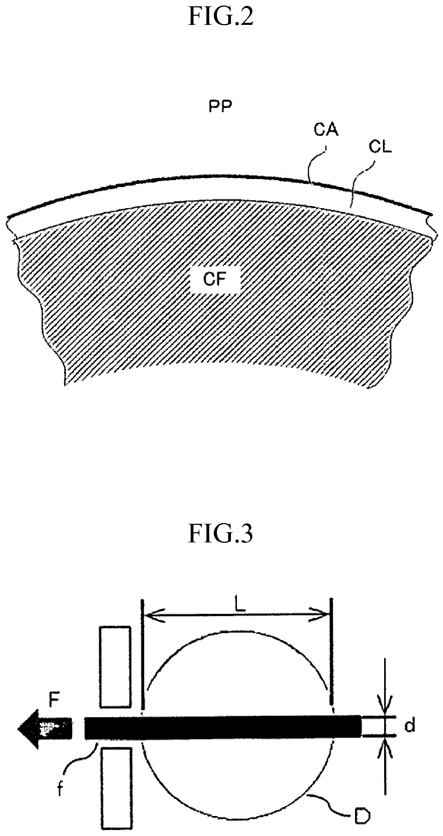

Specifically, for example, a layer of the compatibilizer is preferably interposed between the coating layer of the polyamide and the thermoplastic resin as a base material (see Fig. 2). That is, a layer of the compatibilizer is formed on the surface of the coating layer, and the coating layer and the thermoplastic resin are preferably adjacent to each other via the layer of the compatibilizer. The layer of the compatibilizer is formed to be thinner than the coating layer, and due to the interposition of the layer of the compatibilizer, the adhesion (adhesiveness) between the coating layer and the thermoplastic resin is enhanced and a resin molded body excellent in mechanical strength, particularly the flexural modulus, can be easily obtained. In Fig. 2, PP represents a thermoplastic resin, CF represents a carbon fiber, CL represents a coating layer, and CA represents a layer of a compatibilizer.

Particularly, the compatibilizer layer is preferably interposed between the coating layer and the thermoplastic resin in a state of being bonded to the coating layer (via a hydrogen bond, a covalent bond by a reaction of functional groups of the compatibilizer and the polyamide, or the like) and compatible with the thermoplastic resin. This configuration is easily realized, for example, when a compatibilizer having the same structure or compatible structure as the thermoplastic resin as a base material and containing a site reactive with the above-mentioned functional groups of the polyamide in a part of the molecule is applied as the compatibilizer.

Specifically, for example, in a case where a polyolefin, a polyamide, and a maleic anhydride modified polyolefin as the compatibilizer are applied, it is preferable that in a layer of the maleic anhydride modified polyolefin (a layer of the compatibilizer), a carboxy group formed by ring opening of a maleic anhydride site reacts to bind with an amine residue of the layer of the polyamide (coating layer), and the polyolefin site is interposed in a compatible state with the polyolefin.

Here, a method for confirming that the layer of the compatibilizer is interposed between the coating layer and the thermoplastic resin is as follows.

An infrared spectroscopic analyzer (NICOLET 6700 FT-IR, manufactured by Thermo Fisher Scientific Inc.) is used as an analyzer. For example, in a case of a resin composition (or a resin molded body) of polypropylene (hereinafter referred to as PP) as a thermoplastic resin, PA 66 and MXD 6 as a polyamide, and maleic modified polypropylene (hereinafter referred to as MA-PP) as a modified polyolefin, IR spectra of mixtures thereof, a mixture of PP and PA 66 and MXD 6, a mixture of PP and MA-PP, a PP simple substance as a reference, a mixture of PA 66 and MXD 6, a simple substance of MA-PP are obtained by a KBr tablet method, and the peak areas derived from acid anhydride (peak characteristic to MA-PP) in the mixture ranging from a wave number of 1820 cm$^{-1}$ to 1750 cm$^{-1}$ are comparatively analyzed. In the mixture of PP, PA 66, MXD 6 and MA-PP, the decrease of the acid anhydride peak area are confirmed and it is thus confirmed that MA-PP, PA 66 and MXD 6 react with each other. Accordingly, it can be confirmed that the layer of the compatibilizer (binding layer) is interposed between the covering layer and the thermoplastic resin. In detail, when MA-PP is reacted with PA 66 and MXD 6, the cyclic maleation moiety of MA-PP opens to chemically bond the amine residues of PA 66 and MXD 6, thereby reducing the cyclic maleation moiety, so that it can be confirmed that the layer of the compatibilizer (binding layer) is interposed between the coating layer and the thermoplastic resin.

Hereinafter, details of each component of the resin composition according to the present embodiment are described.

-Thermoplastic Resin (A)-

The thermoplastic resin is a base material of the resin composition and refers to a resin component reinforced by a carbon fiber (also referred to as a matrix resin).

The thermoplastic resin according to the present invention is a polyolefin (PO).

The polyolefin (PO) provides further improvement of the flexural modulus and of the cost.

The polyolefin may be a resin containing a repeating unit derived from an olefin and may contain a repeating unit derived from a monomer other than the olefin as long as it is not more than 30 mass% with respect to the whole resin.

The polyolefin can be obtained by addition polymerization of an olefin (if necessary, a monomer other than the olefin).

The olefin and the monomer other than the olefin to obtain the polyolefin may be one kind or two or more kinds, respectively.

The polyolefin may be a copolymer or a homopolymer. In addition, the polyolefin may be linear or branched.

Here, examples of the olefin include a linear or branched aliphatic olefin and an alicyclic olefin.

Examples of the aliphatic olefin include an α-olefin such as ethylene, propylene, 1-butene, 1-hexene, 4-methyl-1-pentene, 1-octene, 1-decene, 1-hexadecene, and 1-octadecene.

In addition, examples of the alicyclic olefin include cyclopentene, cycloheptene, norbornene, 5-methyl-2-norbornene, tetracyclododecene, vinylcyclohexane, or the like.

Of these, the α-olefin is preferred, the ethylene and propylene are more preferred, and the propylene is particularly preferred, from the viewpoint of the cost.

As the monomer other than the olefin, a known addition polymerizable compound is selected.

Examples of the addition polymerizable compound include: styrenes such as styrene, methylstyrene, α-methylstyrene, β-methylstyrene, t-butylstyrene, chlorostyrene, chloromethylstyrene, methoxystyrene, styrenesulfonic acid or a salt thereof; (meth)acrylates such as alkyl (meth)acrylate, benzyl (meth)acrylate and dimethylaminoethyl (meth)acrylate; halovinyls such as vinyl chloride; vinyl esters such as vinyl acetate and vinyl propionate; vinyl ethers such as vinyl methyl ether; vinylidene halides such as vinylidene chloride; N-vinyl compounds such as N-vinyl pyrrolidone; or the like.

Examples of suitable polyolefins include a polypropylene (PP), a polyethylene (PE), a polybutene, a polyisobutylene, a coumarone-indene resin, a terpene resin, an ethylene-vinyl acetate copolymer resin (EVA) or the like.

Of these, a resin containing only repeating units derived from an olefin is preferred, and particularly from the viewpoint of the cost, the polypropylene is preferred.

The molecular weight of the thermoplastic resin is not particularly limited, and may be determined according to the type of the resin, molding conditions, the application of the resin molded body, or the like. For example, if the thermoplastic resin is a polyolefin, the weight average molecular weight (Mw) thereof is preferably in the range of 10,000 to 300,000, and more preferably in the range of 10,000 to 200,000.

In addition, similar to the above molecular weight, the glass transition temperature (Tg) or the melting point (Tm) of the thermoplastic resin is not particularly limited, and may be determined according to the kind of the resin, molding conditions, the application of the resin molded body, or the like. For example, if the thermoplastic resin is a polyolefin, the melting point (Tm) thereof is preferably in the range of 100°C to 300°C, and more preferably in the range of 150°C to 250°C.

The weight average molecular weight (Mw) and the melting point (Tm) of the polyolefin are values measured as follows.

That is, the weight average molecular weight (Mw) of the polyolefin is determined by gel permeation chromatography (GPC) under the following conditions. A high temperature GPC system "HLC-8321 GPC/HT" is used as a GPC device, and o-dichlorobenzene is used as an eluent. The polyolefin is melted and filtered into the o-dichlorobenzene at a high temperature (a higher temperature of 140°C to 150°C), and the filtrate is used as a measurement sample. As measurement conditions, the sample concentration is 0.5%, the flow rate is 0.6 ml/min, and the sample injection volume is 10 μl. The measurement is performed using an RI detector. In addition, a calibration curve is prepared from 10 samples of "polystyrene standard sample TSK standard" manufactured by Tosoh Corporation: "A-500", "F-1", "F-10", "F-80", "F-380", "A-2500", "F-4", "F-40", "F-128", and "F-700".

The melting temperature (Tm) of the polyolefin is obtained by the "melting peak temperature" described in the method of obtaining the melting temperature of JIS K 7121-1987 "Method for Measuring Transition Temperature of Plastics", from a DSC curve obtained by differential scanning calorimetry (DSC).

The content of the thermoplastic resin may be determined according to the application of the resin molded body, and is, for example, preferably 5 mass% to 95 mass%, more preferably 10 mass% to 95 mass%, and further preferably 20 mass% to 95 mass%, with respect to the total mass of the resin composition.

In a case where a polyolefin is used as the thermoplastic resin, it is preferable to use the polyolefin in an amount of 20 mass% or more with respect to the total mass of the thermoplastic resin.

-Carbon Fiber-

As the carbon fiber, a known carbon fiber is used, and both a PAN-based carbon fiber and a pitch-based carbon fiber are used.

The carbon fiber may be one subjected to known surface treatment.

Examples of the surface treatment for the carbon fiber include oxidation treatment and sizing treatment.

The form of the carbon fiber is not particularly limited, and may be selected according to the application of the resin molded body or the like. Examples of the form of the carbon fiber include a fiber bundle composed of a large number of single fibers, a bundled fiber bundle, a woven fabric in which fibers are woven in two dimensions or three dimensions, or the like.

The fiber diameter, fiber length, and the like of the carbon fiber are not particularly limited, and may be selected according to the application of the resin molded body or the like.

However, since a resin molded body excellent in flexural modulus can be obtained even if the fiber length of the carbon fiber is short, the average fiber length of the carbon fibers is 0.1 mm to 5.0 mm (preferably 0.2 mm to 2.0 mm).

In addition, the average diameter of the carbon fibers may be, for example, 5.0 μm to 10.0 μm (preferably 6.0

$\mu$m to 8.0 $\mu$m).

Here, a method for measuring the average fiber length of the carbon fibers is as follows. The carbon fibers are observed with an optical microscope at a magnification of 100 and the length of the carbon fibers is measured. Then, this measurement is performed on 200 carbon fibers, and the average value thereof is taken as the average fiber length of the carbon fibers.

Here, a method for measuring the average diameter of the carbon fibers is as follows. A section orthogonal to the longitudinal direction of the carbon fiber is observed with a SEM (scanning electron microscope) at a magnification of 1000 times, and the diameter of the carbon fiber is measured. Then, this measurement is performed on 100 carbon fibers, and the average value thereof is taken as the average diameter of the carbon fibers.

A commercially available product may be used as the carbon fiber.

Examples of commercially available products of the PAN-based carbon fiber include "Torayca (registered trademark)" manufactured by Toray Industries, Inc., "Tenax" manufactured by Toho Tenax Co., Ltd., and "Pyrofil (registered trademark)" manufactured by Mitsubishi Rayon Co., Ltd. Other commercially available products of the PAN-based carbon fiber include commercial products manufactured by Hexcel, Cytec, Dow-Aksa, Taiwan Plastic, and SGL.

Examples of commercially available products of the pitch-based carbon fiber include "DIALEAD (registered trademark)" manufactured by Mitsubishi Rayon Co., Ltd., "GRANOC" manufactured by Nippon Graphite Fiber Co., Ltd., and "KRECA" manufactured by Kureha Corporation. Other commercially available products of the PAN-based carbon fiber include commercially available products manufactured by Osaka Gas Chemicals Co., Ltd and Cytec Industries.

The carbon fiber may be used alone, or may be used in combination of two or more types thereof.

The content of the carbon fiber is preferably 0.1 part by mass to 200 parts by mass, more preferably 1 part by mass to 180 parts by mass, and still more preferably 5 parts by mass to 150 parts by mass, with respect to 100 parts by mass of the thermoplastic resin.

When the content of the carbon fiber is 0.1 part by mass or more with respect to 100 parts by mass of the thermoplastic resin, reinforcement of the resin composition is achieved; when the content of the carbon fiber is 200 parts by mass or less with respect to 100 parts by mass of the thermoplastic resin, the moldability at the time of obtaining the resin molded body is improved.

When reinforcing fibers other than the carbon fiber are used, it is preferable to use the carbon fiber in an amount of 80 mass% or more with respect to the total mass of the reinforcing fibers.

Here, the content (parts by mass) with respect to 100 parts by mass of the thermoplastic resin is sometimes abbreviated as "phr (per hundred resin)".

When this abbreviation is used, the content of the carbon fiber is 0.1 phr to 200 phr.

-Polyamide-

The polyamide has a structural unit containing an aromatic ring, other than an aramid structural unit, and a structural unit not containing an aromatic ring, each of the structural unit is a structural unit in which a dicarboxylic acid and a diamine are condensation-polymerized, and a structural unit not containing an aromatic ring, the structural unit not containing an aromatic ring being a structural unit in which a dicarboxylic acid and a diamine are condensation-polymerized, or the structural unit being a ring-opened lactam.

The aromatic ring refers to a monocyclic aromatic ring (cyclopentadiene and benzene) having 5 or more membered rings and a condensed ring (such as naphthalene) condensed with a plurality of monocyclic aromatic rings having 5 or more member rings. The aromatic ring also includes a heterocyclic ring (such as a pyridine ring).

The aramid structural unit refers to a structural unit obtained by polycondensation reaction between a dicarboxylic acid containing an aromatic ring and a diamine containing an aromatic ring.

Here, examples of the structural unit containing an aromatic ring other than an aramid structural unit include at least one of the following structural units (1) and (2).

.

Structural unit (1): -(-NH-Ar$^1$-NH-CO-R$^1$-CO-)-

-(In the structural unit (1), Ar$^1$ represents a divalent organic group containing an aromatic ring. R$^1$ represents a divalent organic group not containing an aromatic ring.)

.

Structural unit (2): -(-NH-R$^2$-NH-CO-Ar$^2$-CO-)-

-(In the structural unit (2), Ar$^2$ represents a divalent organic group containing an aromatic ring. R$^2$ represents a

divalent organic group not containing an aromatic ring.)

On the other hand, examples of the structural unit not containing an aromatic ring include at least one of the following structural units (3) and (4).

.

Structural unit (3):          -(-NH-R$^{31}$-NH-CO-R$^{32}$-CO-)-

-(In the structural unit (3), R$^{31}$ represents a divalent organic group not containing an aromatic ring. R$^{32}$ represents a divalent organic group not containing an aromatic ring.)

.

Structural unit (4):          -(-NH-R$^4$-CO-)-

-(In the structural unit (4), R$^4$ represents a divalent organic group not containing an aromatic ring.)

In the structural formulas (1) to (3), the "divalent organic group" indicated by each symbol is an organic group derived from a divalent organic group of a dicarboxylic acid, a diamine, or a lactam. Specifically, for example, in the structural unit (1), the "divalent organic group containing an aromatic ring" represented by Ar$^1$ represents a residue obtained by removing two amino groups from a diamine, and the "divalent organic group not containing an aromatic ring" represented by R$^1$ represents a residue obtained by removing two carboxy groups from a dicarboxylic acid. For example, in the structural unit (4), the "divalent organic group not containing an aromatic ring" represented by R$^4$ represents an organic group sandwiched between the "NH group" and the "CO group" when the lactam is ring-opened.

Examples of the polyamide include a copolymerized polyamide and a mixed polyamide. As the polyamide, a copolymerized polyamide and a mixed polyamide may be used in combination. Of these, the mixed polyamide is preferred as the polyamide from the viewpoint of further improvement of the flexural modulus.

The copolymerized polyamide is, for example, a copolymerized polyamide obtained by copolymerizing a first polyamide having a structural unit containing an aromatic ring other than an aramid structural unit and a second polyamide having a structural unit not containing an aromatic ring.

The mixed polyamide is, for example, a mixture of polyamides containing a first polyamide containing an aromatic ring and a second polyamide not containing an aromatic ring.

Hereinafter, the first polyamide may be referred to as an "aromatic polyamide" and the second polyamide as an "aliphatic polyamide", for convenience.

In the copolymerized polyamide, the ratio of the aromatic polyamide to the aliphatic polyamide (aromatic polyamide/aliphatic polyamide) is preferably 20/80 to 99/1 (preferably 50/50 to 96/4) by mass ratio from the viewpoint of further improvement of the flexural modulus.

On the other hand, in the mixed polyamide, the ratio of the aromatic polyamide to the aliphatic polyamide (aromatic polyamide/aliphatic polyamide) is preferably 20/80 to 99/1 (preferably 50/50 to 96/4) by mass ratio from the viewpoint of further improvement of the flexural modulus.

In the aromatic polyamide, the proportion of the structural unit containing an aromatic ring is preferably 80 mass% or more (preferably 90 mass% or more, and more preferably 100 mass% or more) with respect to the whole structural units.

On the other hand, in the aliphatic polyamide, the proportion of the structural unit not containing an aromatic ring is preferably 80 mass% or more (preferably 90 mass% or more, and more preferably 100 mass% or more) with respect to the whole structural units.

Examples of the aromatic polyamide include a condensation polymer of a dicarboxylic acid containing an aromatic ring and a diamine not containing an aromatic ring, a condensation polymer of a dicarboxylic acid not containing an aromatic ring and a diamine containing an aromatic ring, or the like.

Examples of the aliphatic polyamide include a condensation polymer of a dicarboxylic acid not containing an aromatic ring and a diamine not containing an aromatic ring, a ring-opening polycondensate of a lactam not containing an aromatic ring, or the like.

Here, examples of the dicarboxylic acid containing an aromatic ring include a phthalic acid (such as terephthalic acid and isophthalic acid), a biphenyldicarboxylic acid, or the like.

Examples of the dicarboxylic acid not containing an aromatic ring include oxalic acid, adipic acid, suberic acid, sebacic acid, 1,4-cyclohexanedicarboxylic acid, malonic acid, succinic acid, glutaric acid, pimelic acid, azelaic acid, or the like.

Examples of the diamine containing an aromatic ring include p-phenylenediamine, m-phenylenediamine, m-xylenediamine, diaminodiphenylmethane, diaminodiphenyl ether, or the like.

Examples of the diamine not containing an aromatic ring include ethylenediamine, pentamethylenediamine, hexamethylenediamine, nonanediamine, decamethylenediamine, 1,4-cyclohexanediamine, or the like.

Examples of the lactam not containing an aromatic ring include ε-caprolactam, undecane lactam, lauryl lactam, or the like.

Each dicarboxylic acid, each diamine, and each lactam may be used alone or in combination of two or more kinds thereof.

Examples of the aromatic polyamide include MXD 6 (a condensation polymer of adipic acid and meta-xylenediamine), nylon 6T (a condensation polymer of terephthalic acid and hexamethylenediamine), nylon 6I (a polycondensate of isophthalic acid and hexamethylenediamine), Nylon 9T (a polycondensate of terephthalic acid and nandiamine), nylon M5T (a polycondensate of terephthalic acid and methylpentadiamine), or the like.

Examples of commercially available products of the aromatic polyamide include "MXD 6" manufactured by Mitsubishi Gas Chemical Company, Inc., "GENESTAR (registered trademark): PA 6T" manufactured by KURARAY CO., LTD., "GENESTAR (registered trademark): PA 9T" manufactured by KURARAY CO., LTD., "TY-502NZ: PA 6T" manufactured by TOYOBO CO., LTD., or the like.

Examples of the aliphatic polyamide include nylon 6 (a ring-opening polycondensate of ε-caprolactam), nylon 11 (a ring-opening polycondensate of undecane lactam), nylon 12 (a ring-opening polycondensate of lauryl lactam), nylon 66 (a condensation polymer of adipic acid and hexamethylenediamine), nylon 610 (a condensation polymer of sebacic acid and hexamethylenediamine), or the like.

Examples of commercially available products of the aliphatic polyamide include "Zytel (registered trademark): 7331J (PA 6)" manufactured by Dupont, "Zytel (registered trademark): 101L (PA 66)" manufactured by Dupont, or the like.

The physical properties of polyamide are described.

The proportion of the aromatic ring in the polyamide (the copolymerized polyamide and the mixed polyamide) is preferably 1 mass% to 55 mass%, more preferably 5 mass% to 50 mass% and even more preferably from 10 mass% to 40 mass%, from the viewpoint of further improvement of the flexural modulus.

The proportion of the aromatic ring in the mixed polyamide is a proportion of the aromatic ring with respect to the aromatic polyamide and the aliphatic polyamide as a whole.

Here, the proportion of the aromatic ring in the polyamide means the total proportion of "a monocyclic aromatic ring and a condensed ring formed by condensation of a monocyclic aromatic ring" contained in the polyamide. In calculation of the proportion of the aromatic ring in the polyamide, a substituent substituted on a monocyclic aromatic ring or a condensed ring formed by condensation of a monocyclic aromatic ring is excluded.

That is, the proportion of the aromatic ring in the polyamide is calculated from the molecular weight of the "structural unit obtained by polycondensation of a dicarboxylic acid and a diamine" of the polyamide, or of the "structural unit which has a ring-opened lactam" as a proportion (mass%) of the molecular weight of the aromatic ring (in a case of having a substituent, the aromatic ring excluding the substituent) contained in the structural unit.

First, the proportion of the aromatic ring in a representative polyamide is shown below. The proportion of the aromatic ring of nylon 6 and nylon 66 not containing an aromatic ring is 0 mass%. On the other hand, since MXD 6 having an aromatic ring has an aromatic ring "$-C_6H_4-$ (molecular weight of 76.10)" in the structural unit, the proportion of the aromatic ring is 30.9 mass%. Similarly, the proportion of the aromatic ring in nylon 9T is 26.49 mass%.

·Nylon 6: structure of the structural unit "$-NH-(CH_2)_5-CO-$"; molecular weight of the structural unit = 113.16; proportion of the aromatic ring = 0 mass%

·Nylon 66: structure of the structural unit "$-NH-(CH_2)_6-NH-CO-(CH_2)_4-CO-$"; molecular weight of the structural unit = 226.32; proportion of the aromatic ring = 0 mass% MXD 6: structure of the structural unit "$-NH-CH_2-C_6H_4-CH_2-NH-CO-(CH_2)_4-CO-$"; molecular weight of the structural unit = 246.34; proportion of the aromatic ring = 30.9 mass%

·Nylon 9T: structure of the structural unit "$-NH-(CH_2)_9-NH-CO-C_6H_4-CO-$"; molecular weight of the structural unit = 288.43; proportion of the aromatic ring = 26.4 mass%

The proportion of the aromatic ring in the copolymerized polyamide and the mixed polyamide is determined as follows.

-Example 1: in case of copolymerized polyamide or mixed polyamide of nylon 6 and MXD 6 (mass ratio of nylon 6 to MXD 6 = 50/50)-

$$\text{Proportion of aromatic ring} = (\text{proportion of nylon 6} \times \text{proportion of aromatic ring in nylon 6}) + (\text{proportion of MXD 6} \times \text{proportion of aromatic ring in MXD 6}) = (0.5 \times 0) + (0.5 \times 30.9) = 15.5 \ (\text{mass\%})$$

-Example 2: in case of copolymerized polyamide or mixed polyamide of nylon 66, MXD 6 and nylon 9T (mass ratio of nylon 66, MXD 6 and nylon 9T = 50/25/25)-

$$\text{Proportion of aromatic ring} = (\text{proportion of nylon 66} \times \text{proportion of aromatic ring in nylon 66}) + (\text{proportion of MXD 6} \times \text{proportion of aromatic ring in MXD 6}) + (\text{proportion of nylon 9T} \times \text{proportion of aromatic ring in nylon 9T}) = (0.5 \times 0.5 \times 0) + (0.25 \times 30.9) + (0.25 \times 26.4) = 14.3 \ (\text{mass\%})$$

The molecular weight of the polyamide (each polyamide of a copolymerized polyamide and a mixed polyamide) is not particularly limited, as long as it is easier to thermally melt than the thermoplastic resin coexisting in the resin composition. For example, the weight average molecular weight of the polyamide is preferably in the range of 10,000 to 300,000, and more preferably in the range of 10,000 to 100,000.

In addition, similar to the above molecular weight, the glass transition temperature or the melting temperature (melting point) of the polyamide (each polyamide of a copolymerized polyamide and a mixed polyamide) is not particularly limited, as long as it is easier to thermally melt than the thermoplastic resin coexisting in the resin composition. For example, the melting point (Tm) of the polyamide (each polyamide of a copolymerized polyamide and a mixed polyamide) is preferably in the range of 100°C to 400°C, and more preferably in the range of 150°C to 300°C.

It is preferable that the polyamide (each polyamide of a copolymerized polyamide and a mixed polyamide) is a resin having a low compatibility with the polyolefin resin, specifically, a resin having a different solubility parameter (SP value) from that of the thermoplastic resin.

Here, a difference in SP value between the polyolefin resin and the polyamide is preferably 3 or more, and more preferably 3 to 6, from the viewpoint of compatibility between the thermoplastic resin and polyamide and repulsive force therebetween.

The SP value here is a value calculated by the Fedor's method. Specifically, the solubility parameter (SP value) is calculated according to the description of, for example, Polym. Eng. Sci., Vol. 14, p. 147 (1974) by the following equation.

$$\text{Equation: SP value} = \sqrt{(Ev/v)} = \sqrt{(\Sigma\Delta ei / \Sigma\Delta vi)}$$

(in the Equation, Ev: vaporization energy (cal/mol), v: molar volume ($cm^3$/mol), $\Delta ei$: evaporation energy of each atom or atomic group, and $\Delta vi$: molar volume of each atom or atomic group)

The solubility parameter (SP value) adopts $(cal/cm^3)^{1/2}$ as a unit, but the unit is omitted according to the practice and the notation is expressed in dimensionless.

From the viewpoint of further improvement of the flexural modulus, the content of the polyamide is 0.1 part by mass to 100 parts by mass, more preferably 30 parts by mass to 90 parts by mass, and still more preferably 40 parts by mass to 80 parts by mass, with respect to 100 parts by mass of the polyolefin resin.

When the content of the polyamide is within the above range, the affinity with the carbon fiber is increased, and the flexural modulus is improved.

From the viewpoint of effectively manifesting the affinity with the carbon fiber, the content of the polyamide is preferably proportional to the content of the carbon fiber described above.

The content of the polyamide with respect to the mass of the carbon fiber is preferably 1 mass% to 200 mass%, more preferably 10 mass% to 150 mass%, and still more preferably 12 mass% to 120 mass%.

When the content of the polyamide with respect to the mass of the carbon fiber is 1 mass% or more, the affinity between the carbon fiber and the polyamide tends to be increased; when the content of the polyamide with respect to the mass of the carbon fiber is 200 mass% or less, the resin flowability is improved.

Here, the adhesion between the polyamide and the carbon fiber is evaluated by an index such as interfacial shear strength.

The interfacial shear strength is measured using a micro-droplet method. Here, the micro-droplet method is described with reference to the pattern diagram of the test shown in Fig. 3.

The micro-droplet method is a method of evaluating the interfacial adhesiveness between the polyamide and the carbon fiber by applying a liquid resin to a monofilament f, attaching a droplet D (also called a resin particle or resin bead), fixing the droplet D, and then conducting a drawing test for the single fiber f in the arrow direction.

Then, based on the test, the interfacial shear strength ($\tau$) is calculated using the following equation.

[Equation 1]

$$\tau = \frac{F}{d\pi L}$$

In the equation, $\tau$ represents interfacial shear strength, F represents a drawing load, d represents a fiber diameter of the single fiber, and L represents a droplet length.

It is an index indicating that the larger the value of the calculated interfacial shear strength ($\tau$) is, the higher the adhesion between the carbon fiber and the polyamide is. By selecting a combination of the carbon fiber and the polyamide having a large value, a resin molded body having a higher flexural modulus is formed.

-Compatibilizer-

The compatibilizer is a resin that enhances the affinity between the thermoplastic resin and the polyamide.

The compatibilizer is one having the same structure as the thermoplastic resin and including a site having an affinity with the polyamide in a part of the molecule. The site having an affinity with the polyamide is a modification site containing a carboxy group, a carboxylic acid anhydride residue, a carboxylic acid ester residue, an imino group, an amino group, or an epoxy group. As the compatibilizer, a polyolefin modified with the above-described modification site is used.

Here, if the thermoplastic resin is a polypropylene (PP), a modified polypropylene (PP) is preferably used as the modified polyolefin, and similarly, if the thermoplastic resin is an ethylene-vinyl acetate copolymer resin (EVA), a modified ethylene-vinyl acetate copolymer resin (EVA) is preferably used as the modified polyolefin.

From the viewpoints of further improvement of the affinity between the polyolefin and the polyamide and the upper limit temperature during the molding process, the modification site introduced into the polyolefin preferably contains a carboxylic acid anhydride residue, and particularly preferably contains a maleic anhydride residue.

The modified polyolefin may be obtained by a method of directly chemically bonding by reacting a compound containing the above-mentioned modification site with a polyolefin, a method of forming a graft chain using the above-mentioned compound containing a modification site and bonding the graft chain to a polyolefin, or the like.

Examples of the above-mentioned compound containing a modification site include maleic anhydride, fumaric anhydride, citric anhydride, N-phenyl maleimide, N-cyclohexyl maleimide, glycidyl (meth)acrylate, glycidyl vinyl benzoate, N-[4-(2,3-epoxypropoxy)-3,5-dimethylbenzyl] acrylamide, an alkyl (meth)acrylate, and derivatives thereof.

Of these, a modified polyolefin obtained by reacting maleic anhydride which is an unsaturated carboxylic acid with a polyolefin is preferred.

Specific examples of the modified polyolefin include acid modified polyolefins such as a maleic anhydride modified polypropylene, a maleic anhydride modified polyethylene, a maleic anhydride modified ethylene vinyl acetate copolymer resin (EVA), and adducts or copolymers thereof.

As the modified polyolefin, a commercially available product may be used.

Examples of the modified polypropylene include Yumex (registered trademark) series (100 TS, 110 TS, 1001, and 1010) manufactured by Sanyo Chemical Industries, Ltd., or the like.

Examples of the modified polyethylene include Yumex (registered trademark) series (2000) manufactured by Sanyo Chemical Industries, Ltd., MODIC (registered trademark) series manufactured by Mitsubishi Chemical Corporation, or the like.

Examples of the modified ethylene-vinyl acetate copolymer resin (EVA) include MODIC (registered trademark) series manufactured by Mitsubishi Chemical Corporation or the like.

The molecular weight of the compatibilizer is not particularly limited, and is preferably in the range of 5,000 to 100,000, and more preferably in the range of 5,000 to 80,000, from the viewpoint of processability.

The content of the compatibilizer is preferably 1 part by mass to 50 parts by mass, more preferably 2 part by mass to 40 parts by mass, and still more preferably 5 parts by mass to 30 parts by mass, with respect to 100 parts by mass of the thermoplastic resin.

The content of the compatibilizer is preferably 1 part by mass to 100 parts by mass, more preferably 5 part by mass to 70 parts by mass, and still more preferably 10 parts by mass to 50 parts by mass, with respect to 100 parts by mass of the polyamide.

When the content of the compatibilizer is within the above range, the affinity between the thermoplastic resin and the polyamide is enhanced, and the flexural modulus is improved.

From the viewpoints of enhancing the affinity between the thermoplastic resin and the polyamide, the content of the compatibilizer is preferably proportional to the content of the polyamide (indirectly proportional to the content of the carbon fiber).

The content of the compatibilizer with respect to the mass of the carbon fiber is preferably 1 mass% to 100 mass%, more preferably 5 mass% to 70 mass%, and still more preferably 10 mass% to 50 mass%.

When the content of the compatibilizer with respect to the mass of the carbon fiber is 1 mass% or more, the affinity between the carbon fiber and the polyamide is easily obtained, and when the content of the compatibilizer with respect to the mass of the carbon fiber is 100 mass% or less, the residual unreacted functional groups which cause discoloration and deterioration are suppressed.

-Other Components-

The resin composition according to the present embodiment may contain other components in addition to each of the above components.

Examples of other components include well-known additives such as a flame retardant, a flame retardant, a flame retardant aid, a sludge preventing agent when heated, a plasticizer, an antioxidant, a releasing agent, a light fastness agent, a weathering agent, a colorant, a pigment, a modifier, an antistatic agent, a hydrolysis inhibitor, a filler, and a reinforcing agent other than a carbon fiber (talc, clay, mica, glass flakes, milled glass, glass beads, crystalline silica, alumina, silicon nitride, aluminum nitride, boron nitride, etc.).

The other components are preferably 0 part by mass to 10 parts by mass, more preferably 0 part by mass to 5 parts by mass with respect to 100 parts by mass of the thermoplastic resin, for example. Here, "0 part by mass" means a form not containing other components.

The resin composition according to the present embodiment is preferably a non-crosslinked resin composition in which the resin component constituting the resin composition is not crosslinked. When the resin component is crosslinked, the movement of the resin component in the resin composition is restricted, and it may be difficult to form a coating layer of the polyamide around the carbon fiber.

(Method for Producing Resin Composition)

The resin composition according to the present invention is produced by melt-kneading each of the above components.

Here, known means is used as means for melt kneading, and examples thereof include a twin-screw extruder, a Henschel mixer, a Banbury mixer, a single screw extruder, a multi-screw extruder, a co-kneader or the like.

The temperature at the time of melt-kneading (cylinder temperature) may be determined according to the melting point of the resin component constituting the resin composition or the like.

Particularly, the resin composition according to the present embodiment is preferably obtained by a production method including a step of melt-kneading a thermoplastic resin, a carbon fiber, a polyamide (a polyamide having a structural unit in which a dicarboxylic acid and a diamine are condensation-polymerized, or a structural unit which has a ring-opened lactam and contains an aromatic ring other than an aramid structural unit, and a structural unit not containing an aromatic ring), and a compatibilizer. When the thermoplastic resin, the carbon fiber, the polyamide and the compatibilizer are melt-kneaded all at once, a coating layer of the polyamide is easily formed around the carbon fiber in a thin and nearly uniform state, and the flexural modulus is increased.

[Resin Molded body]

The resin molded body according to the present invention contains: a thermoplastic resin; a carbon fiber; a polyamide; and a compatibilizer;
wherein the polyamides have a structural unit containing an aromatic ring other than an aramid structure, the structural unit containing an aromatic ring being a structural unit in which a dicarboxylic acid and a diamine are condensation-polymerized, and a structural unit not containing an aromatic ring, the structural unit not containing an aromatic ring being a structural unit in which a dicarboxylic acid and a diamine are condensation-polymerized, or the structural unit being a ring-opened lactam;

the compatibilizer is a modified polyolefin and includes a site having an affinity with the polyamide and the site having an affinity with the polyamide is a modification site containing a carboxy group, a carboxylic acid anhydride residue, a carboxylic acid ester residue, an imino group, an amino group, or an epoxy group;

the thermoplastic resin is a polyolefin;

and the content of the polyamides is 0.1 part by mass to 100 parts by mass with respect to 100 parts by mass of the thermoplastic resin.

The resin molded body according to the present embodiment is preferably a non-crosslinked resin molded body made of a non-crosslinked resin composition in which the resin component constituting the resin composition is not crosslinked. Due to the non-crosslinked resin molded body, a resin molded body excellent in flexural modulus can be obtained.

The resin molded body according to the present invention may be obtained by:

preparing the resin composition according to the present embodiment; and molding the resin composition. Alternatively, the resin molded body may be obtained by: preparing a composition containing components other than a carbon fiber; and mixing the composition and a carbon fiber at the time of molding.

As for the molding method, for example, injection molding, extrusion molding, blow molding, hot press molding, calender molding, coating molding, cast molding, dipping molding, vacuum molding, transfer molding and the like may be applied.

The method for forming a resin molded body according to the present invention is preferably injection molding from the viewpoint of a high degree of freedom of shape.

The cylinder temperature of injection molding is, for example, 180°C to 300°C, and preferably 200°C to 280°C. The mold temperature of the injection molding is, for example, 30°C to 100°C, and more preferably 30°C to 60°C.

Injection molding may be performed using commercially available devices such as NEX 150 manufactured by NISSEI PLASTIC INDUSTRIAL CO., LTD., NEX 300 manufactured by NISSEI PLASTIC INDUSTRIAL CO., LTD., and SE50D manufactured by Sumitomo Heavy Industries, Ltd., for example.

The resin molded body according to the present invention is suitably used for applications such as electronic and electrical equipment, office equipment, household electric appliances, automotive interior materials, containers, and the like. More specifically, casings of electronic and electric equipment and household electric appliances; various parts of electronic and electric equipment and household electrical appliances; interior parts of automobiles; storage cases of CD-ROM and DVD; dishes; beverage bottles; food trays; wrapping materials; films; sheets; or the like.

Particularly, since the resin molded body according to the present invention uses a carbon fiber as the reinforcing fiber, a resin molded product more excellent in mechanical strength can be obtained. Therefore, the resin molded body is suitable for substitute application to metal parts.

Examples

The present invention will be specifically described below with reference to examples, but the present invention is not limited to these Examples.

[Examples 1 to 14 and Comparative Examples 1 to 7 and 15]

The components according to Tables 1 to 3 (the numerical values in the table indicate the number of parts) were kneaded in a twin-screw kneader (TEM 58SS, manufactured by TOSHIBA MACHINE CO., LTD.) under the following kneading conditions and melt-kneading temperatures (cylinder temperatures) shown in Tables 1 to 3, to obtain pellets of resin compositions. The obtained pellets were calcined at 600°C for 2 hours, and the average fiber length of the remaining carbon fibers was measured by the method described above. The measurement results are shown in Tables 1 to 3.

-Kneading Conditions-

·Screw diameter: φ 58 mm
·Rotation speed: 300 rpm
·Discharge nozzle diameter: 1 mm

The obtained pellets were molded into an ISO multipurpose dumbbell test piece (corresponding to ISO 527 tensile test and ISO 178 bending test) (test part thickness of 4 mm and width of 10 mm) and a D2 test piece (length of 60 mm, width of 60 mm, and thickness of 2 mm) at the injection molding temperature (cylinder temperature of 240°C) shown in Tables 1 to 3 and the mold temperature of 50°C by an injection molding machine (NEX 150 manufactured by NISSEI PLASTIC INDUSTRIAL CO., LTD.).

[Evaluation]

The following evaluations were performed using the obtained two test pieces.
The evaluation results are shown in Tables 1 to 3.

-Flexural Modulus-

With respect to the ISO multipurpose dumbbell test piece obtained, the flexural modulus was measured by a method complying with ISO 178 using a universal testing device (Autograph AG-Xplus, manufactured by Shimadzu Corporation).

-Tensile Modulus and Elongation-

With respect to the ISO multipurpose dumbbell test piece obtained, the tensile modulus and the elongation were measured by a method according to ISO 527 using an evaluation device (precision universal testing machine Autograph AG-IS 5kN, manufactured by Shimadzu Corporation).

-Appearance Quality-

The obtained D2 test piece was observed and the appearance quality was evaluated as follows.
The surface of the test piece was visually observed to evaluate the presence or absence of a depression and the surface property of the flat part of the molded body. The evaluation criteria are as follows.

A: There are no domain-like defects on the surface part, and the entire surface is uniform.
B: Domain-like unevenness of about 1 mm is observed on the surface part, but the tactile sensation is close to uniform.
C: Domain-like unevenness of 1 mm or more is present on the surface part, and when touching the domain part with fingers, the tactile sensation is different from other parts.
D: A depression is generated in the flat part of the molded body.

-Presence or Absence of Coating Layer-

Using the obtained D2 test piece, presence or absence of a coating layer of the polyamide was confirmed according to the method described above.

[Table 1]

| Examples | | | Example 1 | Example 2 | Example 3 | Example 4 | Example 5 | Example 6 | Example 7 | Example 8 |
|---|---|---|---|---|---|---|---|---|---|---|
| Compositions | Thermoplastic resin | Polypropylene | 50 | 50 | 50 | 50 | 50 | 50 | 50 | 50 |
| | | Polyethylene | | | | | | | | |
| | Reinforcing fiber | Carbon fiber | 20 | 20 | 20 | 20 | 20 | 20 | 20 | 20 |
| | Mixed PA — Aliphatic PA | PA 6 | 10 | 15 | 1 | | | | 10 | 10 |
| | | PA 66 | | | | 10 | 15 | 1 | | |
| | Mixed PA — Aromatic PA | MXD 6 | 15 | 10 | 24 | | | | 15 | 15 |
| | | PA 9T | | | | 15 | 10 | 24 | | |
| | Compatibilizer | Maleic anhydride modified polypropylene | 5 | 5 | 5 | 5 | 5 | 5 | 5 | 5 |
| | | Maleic anhydride modified polyethylene | | | | | | | | |
| | Total | | 100 | 100 | 100 | 100 | 100 | 100 | 100 | 100 |
| | Proportion of aromatic ring in polyamide (mass%) | | 19 | 12 | 30 | 16 | 11 | 25 | 19 | 19 |
| | Parts of carbon fiber (with respect to 100 parts of thermoplastic resin) | | 40 | 40 | 40 | 40 | 40 | 40 | 40 | 40 |
| | Parts of polyamide (with respect to 100 parts of thermoplastic resin) | | 50 | 50 | 50 | 50 | 50 | 50 | 50 | 50 |
| | Parts of compatibilizer (with respect to 100 parts of thermoplastic resin) | | 10 | 10 | 10 | 10 | 10 | 10 | 10 | 10 |
| | Mass% of polyamide (with respect to carbon fiber) | | 125 | 125 | 125 | 125 | 125 | 125 | 125 | 125 |
| | Mass% of compatibilizer (with respect to carbon fiber) | | 25 | 25 | 25 | 25 | 25 | 25 | 25 | 25 |
| Conditions | Melt-kneading temperature (°C) | | 240 | 240 | 240 | 240 | 240 | 240 | 240 | 240 |
| | Injection molding temperature (°C) | | 240 | 240 | 240 | 240 | 240 | 240 | 240 | 240 |

(continued)

| Examples | | Example 1 | Example 2 | Example 3 | Example 4 | Example 5 | Example 6 | Example 7 | Example 8 |
|---|---|---|---|---|---|---|---|---|---|
| Properties | Flexural modulus (Gpa) | 20.0 | 18.0 | 22.0 | 19.0 | 18.0 | 21.5 | 19.5 | 19.0 |
| | Appearance quality | A | A | A | A | A | A | A | A |
| | Average fiber length (mm) | 0.7 | 0.7 | 0.7 | 0.7 | 0.7 | 0.7 | 0.7 | 0.7 |
| | Presence or absence of coating layer | Presence | Presence | Presence | Presence | Presence | Presence | Presence | Presence |

[Table 2]

| | | | Examples | Example 9 | Example 10 | Example 11 | Example 12 | Example 13 | Example 14 | Comparative Example 15 |
|---|---|---|---|---|---|---|---|---|---|---|
| Compositions | Thermoplastic resin | | Polypropylene | 30 | | | 97 | 35 | 49 | 9.5 |
| | | | Polyethylene | | 50 | 50 | | | | |
| | Reinforcing fiber | | Carbon fiber | 40 | 20 | 20 | 1 | 30 | 40 | 40 |
| | Mixed PA | Aliphatic PA | PA 6 | 10 | 10 | | 0.8 | 22 | 0.5 | 25 |
| | | | PA 66 | | | 10 | | | | |
| | | Aromatic PA | MXD 6 | | 15 | | 0.2 | 8 | 0.5 | 25 |
| | | | PA 9T | 10 | | 15 | | | | |
| | Compatibilizer | | Maleic anhydride modified polypropylene | 10 | | | 1 | 5 | 10 | 0.5 |
| | | | Maleic anhydride modified polyethylene | | 5 | 5 | | | | |
| | | | Total | 100 | 100 | 100 | 100 | 100 | 100 | 100 |
| | | | Proportion of aromatic ring in polyamide (mass%) | 13 | 19 | 16 | 6 | 8 | 15 | 15 |
| | | | Parts of carbon fiber (with respect to 100 parts of thermoplastic resin) | 133 | 40 | 40 | 1 | 86 | 82 | 421 |
| | | | Parts of polyamide (with respect to 100 parts of thermoplastic resin) | 67 | 50 | 50 | 1 | 86 | 2 | 526 |
| | | | Parts of compatibilizer (with respect to 100 parts of thermoplastic resin) | 33 | 10 | 10 | 1 | 14 | 20 | 5 |
| | | | Mass% of polyamide (with respect to carbon fiber) | 50 | 125 | 125 | 100 | 100 | 3 | 125 |
| | | | Mass% of compatibilizer (with respect to carbon fiber) | 25 | 25 | 25 | 100 | 17 | 25 | 1 |
| Conditions | | | Melt-kneading temperature (°C) | 240 | 240 | 240 | 240 | 240 | 240 | 240 |
| | | | Injection molding temperature (°C) | 240 | 240 | 240 | 240 | 240 | 240 | 240 |

20

(continued)

| | Examples | Example 9 | Example 10 | Example 11 | Example 12 | Example 13 | Example 14 | Comparative Example 15 |
|---|---|---|---|---|---|---|---|---|
| Properties | Flexural modulus (Gpa) | 20.0 | 16.0 | 15.0 | 6.0 | 26.0 | 14.0 | 12.0 |
| | Appearance quality | A | A | A | A | A | A | A |
| | Average fiber length (mm) | 0.7 | 0.7 | 0.7 | 0.7 | 0.7 | 0.7 | 0.7 |
| | Presence or absence of coating layer | Presence | Presence | Presence | Presence | Presence | Presence | Presence |

[Table 3]

| Examples | | | Comparitive Example 1 | Comparitive Example 2 | Comparitive Example 3 | Comparitive Example 4 | Comparitive Example 5 | Comparitive Example 6 | Comparitive Example 7 |
|---|---|---|---|---|---|---|---|---|---|
| Compositions | Thermoplastic resin | Polypropylen e | 75 | 70 | 80 | 55 | 55 | 55 | 55 |
| | | Polyethylene | | | | | | | |
| | Reinforcing fiber | Carbon fiber | 20 | 20 | 20 | 20 | 20 | 20 | 20 |
| | Mixe d PA / Aliphati cPA | PA 6 | | | | 10 | | | 20 |
| | | PA 66 | | | | | | | |
| | Mixe d PA / Aromati cPA | MXD 6 | | | | 15 | 25 | | |
| | | PA 9T | | | | | | 20 | |
| | Compatibilizer | Maleic anhydride modified polypropylen e | 5 | 10 | | | | 5 | 5 |
| | | Maleic anhydride modified polyethylene | | | | | | | |
| | Total | | 100 | 100 | 100 | 100 | 100 | 100 | 100 |
| | Proportion of aromatic ring in polyamide (mass%) | | - | - | - | 19 | 31 | 26 | 0 |
| | Parts of carbon fiber (with respect to 100 parts of thermoplastic resin) | | 27 | 29 | 25 | 36 | 36 | 36 | 36 |
| | Parts of polyamide (with respect to 100 parts of thermoplastic resin) | | 0 | 0 | 0 | 45 | 45 | 36 | 36 |
| | Parts of compatibilizer (with respect to 100 parts of thermoplastic resin) | | 7 | 14 | 0 | 0 | 0 | 9 | 9 |
| | Mass% of polyamide (with respect to carbon fiber) | | 0 | 0 | 0 | 125 | 125 | 100 | 100 |
| | Mass% of compatibilizer (with respect to carbon fiber) | | 25 | 50 | 0 | 0 | 0 | 25 | 25 |

(continued)

| Examples | | Comparitive Example 1 | Comparitive Example 2 | Comparitive Example 3 | Comparitive Example 4 | Comparitive Example 5 | Comparitive Example 6 | Comparitive Example 7 |
|---|---|---|---|---|---|---|---|---|
| Conditions | Melt-kneading temperature (°C) | 190 | 190 | 190 | 240 | 240 | 240 | 240 |
| | Injection molding temperature (°C) | 190 | 190 | 190 | 240 | 240 | 240 | 240 |
| | Flexural modulus (Gpa) | 2.0 | 2.2 | 1.8 | 2.4 | 1.8 | 6.0 | 8.0 |
| Properties | Appearance quality | B | B | C | C | C | A | B |
| | Average fiber length (mm) | 0.7 | 0.7 | 0.7 | 0.7 | 0.7 | 0.7 | 0.7 |
| | Presence or absence of coating layer | Absence | Absence | Absence | Absence | Absence | Presence | Presence |

Details of the types of the materials in Tables 1 to 3 are as follows.

-Thermoplastic Resin-

·Polypropylene (Novatec (registered trademark) PP MA3, manufactured by Japan Polypropylene Corporation)

·Polyethylene (ULTZEX 20100J, manufactured by Prime Polymer Co., Ltd.)

-Reinforcing Fiber-

·Carbon fiber (with surface treatment, chopped carbon fiber Torayca (registered trademark), manufactured by Toray Industries, Inc.; average fiber length of 20 mm, and average diameter of 7 μm)

-Aliphatic PA (Aliphatic Polyamide)-

·PA 6 (Nylon 6, Zytel (registered trademark) 7331J, manufactured by Dupont)
·PA 66 (Nylon 66, 101L, manufactured by Dupont)

-Aromatic PA (Aromatic Polyamide)-

·MXD 6 (MXD 6, manufactured by Mitsubishi Gas Chemical Company, Inc.)
·PA 9T (Nylon 9T, GENESTAR PA 9T, manufactured by KURARAY CO., LTD.)

-Compatibilizer-

·Maleic anhydride modified polypropylene (Yumex (registered trademark) 110 TS, manufactured by Sanyo Chemical Industries, Ltd.)
·Maleic anhydride modified polyethylene (MODIC M142 manufactured by Mitsubishi Chemical Corporation)

It is understood from the above results that, in the present Example, a resin molded body excellent in flexural modulus can be obtained as compared with the Comparative Example.
It is also understood that, in the present example, a resin molded body excellent in tensile modulus and appearance quality can be obtained.
When the molded body produced in each Example was analyzed by the method described above, it was confirmed that a layer of the compatibilizer used (a layer of the maleic anhydride modified polypropylene, and a layer of the maleic anhydride modified polyethylene) was interposed between the coating layer and the thermoplastic resin (a layer of the compatibilizer is formed on the surface of the coating layer).

Claims

1.   A resin composition, comprising:

a thermoplastic resin;
a carbon fiber;
polyamides having:

a structural unit containing an aromatic ring other than an aramid structure, the structural unit containing an aromatic ring being a structural unit in which a dicarboxylic acid and a diamine are condensation-polymerized, and

a structural unit not containing an aromatic ring, the structural unit not containing an aromatic ring being a structural unit in which a dicarboxylic acid and a diamine are condensation-polymerized, or the structural unit being a ring-opened lactam; and

a compatibilizer, wherein the compatibilizer is a modified polyolefin and includes a site having an affinity with the polyamide and the site having an affinity with the polyamide is a modification site containing a carboxy group, a carboxylic acid anhydride residue, a carboxylic acid ester residue, an imino group, an amino group, or an epoxy group;

wherein the thermoplastic resin is a polyolefin; and

wherein a content of the polyamides is 0.1 part by mass to 100 parts by mass with respect to 100 parts by mass of the thermoplastic resin.

2. The resin composition according to claim 1, wherein the modification site contains a carboxylic acid anhydride residue.

3. The resin composition according to claim 1, wherein the modification site includes maleic anhydride, fumaric anhydride, citric anhydride, N-phenyl maleimide, N-cyclohexyl maleimide, glycidyl (meth)acrylate, glycidyl vinyl benzoate, N-[4-(2,3-epoxypropoxy)-3,5-dimethylbenzyl] acrylamide, an alkyl (meth)acrylate, and derivatives thereof.

4. The resin composition according to claim 1, wherein the modification site contains a maleic anhydride residue.

5. The resin composition according to claim 1,

wherein the structural unit containing an aromatic ring is at least one of the following structural units (1) and (2), and

the structural unit not containing an aromatic ring is at least one of the following structural units (3) and (4):

.

Structural unit (1): $-(-NH-Ar^1-NH-CO-R^1-CO-)-$

-(In the structural unit (1), $Ar^1$ represents a divalent organic group containing an aromatic ring. $R^1$ represents a divalent organic group not containing an aromatic ring.)

.

Structural unit (2): $-(-NH-R^2-NH-CO-Ar^2-CO-)-$

-(In the structural unit (2), $Ar^2$ represents a divalent organic group containing an aromatic ring. $R^2$ represents a divalent organic group not containing an aromatic ring.)

.

Structural unit (3): $-(-NH-R^{31}-NH-CO-R^{32}-CO-)-$

-(In the structural unit (3), $R^{31}$ represents a divalent organic group not containing an aromatic ring. $R^{32}$ represents a divalent organic group not containing an aromatic ring.)

.

Structural unit (4): $-(-NH-R^4-CO-)-$

-(In the structural unit (4), $R^4$ represents a divalent organic group not containing an aromatic ring.)

6. The resin composition according to claim 1,
wherein the polyamides are copolymerized polyamides obtained by copolymerizing a first polyamide having the structural unit containing an aromatic ring and a second polyamide having the structural unit not containing an aromatic ring.

7. The resin composition according to claim 1,

wherein the polyamides are a mixture of polyamides, the mixture containing a first polyamide having the structural unit containing an aromatic ring and a second polyamide having the structural unit not containing an aromatic ring.

8. The resin composition according to claim 1,
   wherein a proportion of the aromatic ring in the polyamides is 10 mass% to 40 mass%.

9. The resin composition according to claim 1,
   wherein an average fiber length of the carbon fibers is 0.1 mm to 5.0 mm, as measured according to the description.

10. The resin composition according to claim 1,
    wherein the average fiber length of the carbon fibers may be 0.2 mm to 2.0 mm, as measured according to the description.

11. The resin composition according to claim 1,
    wherein a content of the carbon fiber is 0.1 part by mass to 200 parts by mass with respect to 100 parts by mass of the thermoplastic resin.

12. The resin composition according to claim 1,
    wherein a content of the compatibilizer is 1 part by mass to 50 parts by mass with respect to 100 parts by mass of the thermoplastic resin.

13. The resin composition according to claim 1,
    wherein the content of the polyamide is 1 mass% to 200 mass% with respect to the mass of the carbon fiber.

14. The resin composition according to claim 1,
    wherein the content of the compatibilizer is 1 mass% to 100 mass% with respect to the mass of the carbon fiber.

15. The resin composition according to claim 1,
    wherein the resin composition is a non-crosslinked resin composition.

16. A resin molded body, comprising the resin composition according to any one of claims 1 to 15.

**Patentansprüche**

1. Harzzusammensetzung, umfassend:

   ein thermoplastisches Harz;
   eine Kohlenstofffaser;
   Polyamide mit:

   einer Struktureinheit, die einen anderen aromatischen Ring als eine Aramidstruktur enthält, wobei die einen aromatischen Ring enthaltende Struktureinheit eine Struktureinheit ist, in der eine Dicarbonsäure und ein Diamin kondensationspolymerisiert sind, und
   einer Struktureinheit, die keinen aromatischen Ring enthält, wobei die Struktureinheit, die keinen aromatischen Ring enthält, eine Struktureinheit ist, in der eine Dicarbonsäure und ein Diamin kondensationspolymerisiert sind, oder die Struktureinheit ein ringgeöffnetes Lactam ist; und
   einen Kompatibilisator, wobei der Kompatibilisator ein modifiziertes Polyolefin ist und eine Stelle mit einer Affinität zum Polyamid beinhaltet und die Stelle mit einer Affinität zum Polyamid eine Modifikationsstelle ist, die eine Carboxygruppe, einen Carbonsäureanhydridrest, einen Carbonsäureesterrest, eine Iminogruppe, eine Aminogruppe oder eine Epoxygruppe enthält;
   wobei das thermoplastische Harz ein Polyolefin ist; und
   wobei ein Gehalt an den Polyamiden 0,1 Massenteile bis 100 Massenteile, bezogen auf 100 Massenteile des thermoplastischen Harzes, beträgt.

2. Harzzusammensetzung nach Anspruch 1, wobei die Modifikationsstelle einen Carbonsäureanhydridrest enthält.

3. Harzzusammensetzung nach Anspruch 1, wobei die Modifikationsstelle Maleinsäureanhydrid, Fumarsäureanhydrid, Citronensäureanhydrid, N-Phenylmaleimid, N-Cyclohexylmaleimid, Glycidyl(meth)acrylat, Glycidylvinylbenzoat, N-[4-(2,3-Epoxypropoxy)-3,5-dimethylbenzyl]acrylamid, ein Alkyl(meth)acrylat und Derivate davon beinhaltet.

4. Harzzusammensetzung nach Anspruch 1, wobei die Modifikationsstelle einen Maleinsäureanhydridrest enthält.

5. Harzzusammensetzung nach Anspruch 1,

wobei die Struktureinheit, die einen aromatischen Ring enthält, mindestens eine der folgenden Struktureinheiten (1) und (2) ist, und
die Struktureinheit, die keinen aromatischen Ring enthält, mindestens eine der folgenden Struktureinheiten (3) und (4) ist:

.

Struktureinheit (1):     $-(-NH-Ar^1-NH-CO-R^1-CO-)-$

-(In der Struktureinheit (1) steht $Ar^1$ für eine zweiwertige organische Gruppe, die einen aromatischen Ring enthält. $R^1$ steht für eine zweiwertige organische Gruppe, die keinen aromatischen Ring enthält.)
.

Struktureinheit (2):     $-(-NH-R^2-NH-CO-Ar^2-CO-)-$

-(In der Struktureinheit (2) steht $Ar^2$ für eine zweiwertige organische Gruppe, die einen aromatischen Ring enthält. $R^2$ steht für eine zweiwertige organische Gruppe, die keinen aromatischen Ring enthält.)
.

Struktureinheit (3):     $-(-NH-R^{31}-NH-CO-R^{32}-CO-)-$

-(In der Struktureinheit (3) steht $R^{31}$ für eine zweiwertige organische Gruppe, die keinen aromatischen Ring enthält. $R^{32}$ steht für eine zweiwertige organische Gruppe, die keinen aromatischen Ring enthält.)
.

Struktureinheit (4):     $-(-NH-R^4-CO-)-$

-(In der Struktureinheit (4) steht $R^4$ für eine zweiwertige organische Gruppe, die keinen aromatischen Ring enthält.)

6. Harzzusammensetzung nach Anspruch 1,
wobei die Polyamide copolymerisierte Polyamide sind, die durch Copolymerisieren eines ersten Polyamids mit der Struktureinheit, die einen aromatischen Ring enthält, und eines zweiten Polyamids mit der Struktureinheit, die keinen aromatischen Ring enthält, erhalten werden.

7. Harzzusammensetzung nach Anspruch 1,
wobei die Polyamide eine Mischung von Polyamiden sind, wobei die Mischung ein erstes Polyamid mit der Struktureinheit, die einen aromatischen Ring enthält, und ein zweites Polyamid mit der Struktureinheit, die keinen aromatischen Ring enthält, enthält.

8. Harzzusammensetzung nach Anspruch 1,
wobei ein Anteil des aromatischen Rings in den Polyamiden 10 Masse-% bis 40 Masse-% beträgt.

9. Harzzusammensetzung nach Anspruch 1,
wobei eine durchschnittliche Faserlänge der Kohlenstofffasern 0,1 mm bis 5,0 mm beträgt, gemessen gemäß der Beschreibung.

10. Harzzusammensetzung nach Anspruch 1,
wobei die durchschnittliche Faserlänge der Kohlenstofffasern 0,2 mm bis 2,0 mm betragen kann, gemessen gemäß der Beschreibung.

**11.** Harzzusammensetzung nach Anspruch 1,
wobei ein Gehalt an Kohlenstofffasern 0,1 Massenteile bis 200 Massenteile, bezogen auf 100 Massenteile des thermoplastischen Harzes, beträgt.

**12.** Harzzusammensetzung nach Anspruch 1,
wobei ein Gehalt des Kompatibilisators 1 Massenteil bis 50 Massenteile, bezogen auf 100 Massenteile des thermoplastischen Harzes, beträgt.

**13.** Harzzusammensetzung nach Anspruch 1,
wobei der Anteil des Polyamids 1 Masse-% bis 200 Masse-%, bezogen auf die Masse der Kohlenstofffaser, beträgt.

**14.** Harzzusammensetzung nach Anspruch 1,
wobei der Gehalt des Kompatibilisators 1 Masse-% bis 100 Masse%, bezogen auf die Masse der Kohlenstofffaser, beträgt.

**15.** Harzzusammensetzung nach Anspruch 1,
wobei die Harzzusammensetzung eine nicht vernetzte Harzzusammensetzung ist.

**16.** Harzformkörper, umfassend die Harzzusammensetzung nach einem der Ansprüche 1 bis 15.


**Revendications**

**1.** Composition de résine, comprenant :

une résine thermoplastique ;
une fibre de carbone ;
des polyamides, ayant :

une unité structurale contenant un noyau aromatique autre qu'une structure en aramide, l'unité structurale contenant un noyau aromatique étant une unité structurale dans laquelle un acide dicarboxylique et un diamine sont polymérisés par condensation, et
une unité structurale ne contenant pas un noyau aromatique, l'unité structurale ne contenant pas un noyau aromatique étant une unité structurale dans laquelle un acide dicarboxylique et un diamine sont polymérisés par condensation, ou l'unité structurale étant un lactame à cycle ouvert ; et
un agent de compatibilité, dans laquelle l'agent de compatibilité est une polyoléfine modifiée et comprend un site ayant une affinité avec le polyamide et le site ayant une affinité avec le polyamide est un site de modification contenant un groupe carboxy, un résidu d'anhydride d'acide carboxylique, un résidu d'ester d'acide carboxylique, un groupe imino, un groupe amino, ou un groupe epoxy ;
dans laquelle la résine thermoplastique est une polyoléfine ; et
dans laquelle le contenu des polyamides est de 0,1 partie en masse à 100 parties en masse par rapport à 100 parties en masse de la résine thermoplastique.

**2.** Composition de résine selon la revendication 1, dans laquelle le site de modification contient un résidu d'anhydride d'acide carboxylique.

**3.** Composition de résine selon la revendication 1, dans laquelle le site de modification comprend de l'anhydride maléique, de l'anhydride fumarique, de l'acide citrique, du la N-phénile maléimide, de la N-cyclohexyle maléimide, du (méth)acrylate de glycidyle, du benzoate de vinyle de glycidyle, du N-[4-(2,3-epoxypropoxy)-3,5-dimethylbenzyl] acrylamide, un (méth)acrylate d'alkyle, et des dérivés de ceux-ci.

**4.** Composition de résine selon la revendication 1, dans laquelle le site de modification contient un résidu d'anhydride d'acide carboxylique.

**5.** Composition de résine selon la revendication 1,

dans laquelle l'unité structurale contenant un noyau aromatique est au moins une des unités structurales (1) et (2) suivantes, et

l'unité structurale ne contenant pas un noyau aromatique est au moins une des unités structurales (3) et (4) suivantes :

.

Unité structurale (1) :        -(-NH-Ar$^1$-NH-CO-R$^1$-CO-)-

-(Dans l'unité structurale (1), Ar$^1$ représente un groupe organique divalent contenant un noyau aromatique. R$^1$ représente un groupe organique divalent ne contenant pas un noyau aromatique.)

.

Unité structurale (2) :        -(-NH-R$^2$-NH-CO-Ar$^2$-CO-)-

-(Dans l'unité structurale (2), Ar$^2$ représente un groupe organique divalent contenant un noyau aromatique. R$^2$ représente un groupe organique divalent ne contenant pas un noyau aromatique.)

.

Unité structurale (3) :        -(-NH-R$^{31}$-NH-CO-R$^{32}$-CO-)-

-(Dans l'unité structurale (3), R$^{31}$ représente un groupe organique divalent contenant un noyau aromatique. R$^{32}$ représente un groupe organique divalent ne contenant pas un noyau aromatique.)

.

Unité structurale (4) :        -(-NH-R$^4$-CO-)-

-(Dans l'unité structurale (4), R$^4$ représente un groupe organique divalent contenant un noyau aromatique.)

6.  Composition de résine selon la revendication 1,
    dans laquelle, les polyamides sont des polyamides copolymérisés obtenus par copolymérisation d'un premier polyamide ayant l'unité structurale contenant un noyau aromatique et un second polyamide ayant l'unité structurale ne contenant pas un noyau aromatique.

7.  Composition de résine selon la revendication 1,
    dans laquelle, les polyamides sont un mélange de polyamides, le mélange contenant un premier polyamide ayant l'unité structurale contenant un noyau aromatique et un second polyamide ayant l'unité structurale ne contenant pas un noyau aromatique.

8.  Composition de résine selon la revendication 1,
    dans laquelle une proportion du noyau aromatique dans les polyamides est de 10 à 40% en masse.

9.  Composition de résine selon la revendication 1,
    dans laquelle une longueur de fibre moyenne des fibres de carbone est de 0,1 mm à 5,0 mm, telle que mesurée selon la description.

10. Composition de résine selon la revendication 1,
    dans laquelle la longueur de fibre moyenne des fibres de carbone est de 0,2 mm à 2,0 mm, telle que mesurée selon la description.

11. Composition de résine selon la revendication 1,
    dans laquelle le contenu de la fibre de carbone est de 0,1 partie en masse à 200 parties en masse par rapport à 100 parties en masse de la résine thermoplastique.

12. Composition de résine selon la revendication 1,
    dans laquelle un contenu de l'agent de compatibilité est de 1 partie en masse à 50 parties en masse par rapport à 100 parties en masse de la résine thermoplastique.

13. Composition de résine selon la revendication 1,
    dans laquelle le contenu du polyamide est de 1 à 200% en masse par rapport à la masse de la fibre de carbone.

**14.** Composition de résine selon la revendication 1,
dans laquelle le contenu de l'agent de compatibilité est de 1 à 100% en masse par rapport à la masse de la fibre de carbone.

**15.** Composition de résine selon la revendication 1,
dans laquelle la composition de résine est une composition de résine non-réticulée.

**16.** Corps moulé en résine, comprenant la composition de résine selon l'une quelconque des revendications 1 à 15.

# FIG.1

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003528956 T
- JP 2014181307 A
- JP 2010168559 A
- JP H06100775 A
- JP 2005162775 A

**Non-patent literature cited in the description**

- *Polym. Eng. Sci.,* 1974, vol. 14, 147